Europäisches Patentamt

European Patent Office

Office européen des brevets

(11) Publication number: **0 215 484**
**B1**

# (12) EUROPEAN PATENT SPECIFICATION

(45) Date of publication of patent specification: **06.12.89**

(51) Int. Cl.⁴: **B 65 G 47/88,** B 65 G 47/14

(21) Application number: **86112886.6**

(22) Date of filing: **18.09.86**

(54) Parts supplying apparatus.

(30) Priority: **18.09.85 JP 142119/85 u**

(43) Date of publication of application:
**25.03.87 Bulletin 87/13**

(45) Publication of the grant of the patent:
**06.12.89 Bulletin 89/49**

(84) Designated Contracting States:
**BE DE FR GB IT NL**

(56) References cited:
**DE-B-2 047 649**
**FR-A-2 559 460**
**GB-A-1 470 439**

(73) Proprietor: **YOSHIDA KOGYO K.K.**
**No. 1 Kanda Izumi-cho Chiyoda-ku**
**Tokyo (JP)**

(72) Inventor: **Watanabe, Kozo**
**4024, Mikkaichi**
**Kurobe-shi Toyama-ken (JP)**

(74) Representative: **Patentanwälte Leinweber &**
**Zimmermann**
**Rosental 7/II Aufg.**
**D-8000 München 2 (DE)**

## Description

The present invention relates to an apparatus for supplying parts, comprising: a frame; a reservoir mounted on said frame for storing a number of parts; a downwardly inclined chute connected at its upstream end to said reservoir for slidingly supporting the parts from said reservoir in succession.

An apparatus this type is disclosed in Japanese Patent Publication 43—28966. This prior art apparatus comprises as reillustrated here in Figure 10 of the accompanying drawings, a pair of pivotable shutters or levers disposed near a suitable downstream position of a chute and spaced from each other by a suitable distance along the chute and a pair of hydraulic cylinders each operatively connected to the respective shutter or actuating the same to project into and retract from a parts passageway in timed relation to each other shutter to send out the parts one at a time from the chute.

However, this prior apparatus is not suitable for supplying small parts, partly because the shutters are driven by the respective hydraulic cylinders, which make the entire apparatus large in size, and partly because precise movements of the shutters in timed relation to each other are difficult to achieve.

The present invention seeks to provide a parts supplying apparatus which is simple in construction and compact in size and in which successive small parts can be delivered from a chute one at a time with accuracy.

According to the invention a parts supplying apparatus satisfying these requirements is characterized by a pair of juxtaposed first and second suction mouths disposed adjacent to a downstream end portion of said chute and spaced from each other along said chute, said pair of first and second suction mouths pointing towards a part of the chute along which the parts will pass and having substantially parallel outlets for temporarily stopping the successive parts by suction to deliver the same, one at a time, from said chute; and a pair of first and second suction pipes communicating with said first and second suction mouths, respectively, and having at least one valve operative to impart suction to said first and second suction mouths alternately such that there is negligible time lag when such alternation takes place.

Since the parts are delivered one at a time by the first and second suction mouths disposed at the downstream side of the chute and communicating with the valved suction pipes, it is possible to make the entire apparatus simple in construction and compact in size, compared with the prior art apparatus in which the parts are delivered one at a time by mechanical means such as pivotable shutters or blocking levers.

Further, since the size of each suction mouth can be reduced in conformity with the size of the parts to be supplied, it is possible to deliver the parts one at a time with accuracy even if the parts are small.

The invention will now be described in more detail with reference to an exemplifying nonlimiting embodiment thereof illustrated in the accompanying drawings.

Figure 1 is a fragmentary perspective view of a parts supplying apparatus embodying the present invention;

Figure 2 is an enlarged plan view, partially in cross section, of a primary portion of the apparatus of Figure 1;

Figure 3 is a vertical cross-sectional view taken along line III—III of Figure 2;

Figure 4 is a cross-sectional view similar to Figure 3, showing a part having been stopped by suction;

Figures 5A, 5B and 5C are plan views similar to Figure 2, illustrating the manner in which the parts are delivered one at a time from a chute;

Figures 6 and 7 are views similar to Figure 2, showing modified forms of the apparatus;

Figure 8 is a fragmentary plan view, partially in cross section, of another modified form of the apparatus, showing a channel-shaped chute;

Figure 9 is a vertical cross-sectional view taken along line IX—IX of Figure 8; and

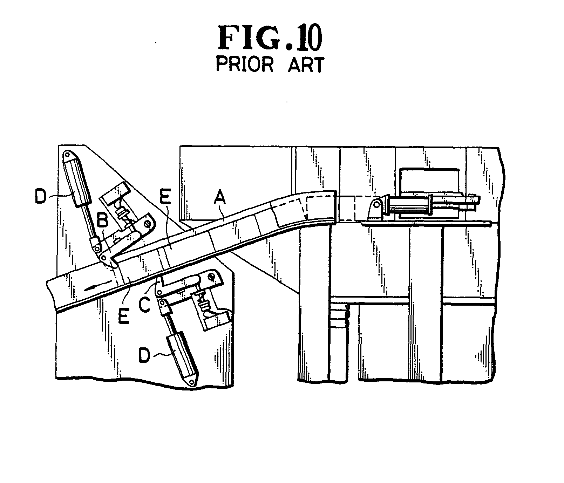

Figure 10 is a fragmentary side elevational view of a prior art apparatus.

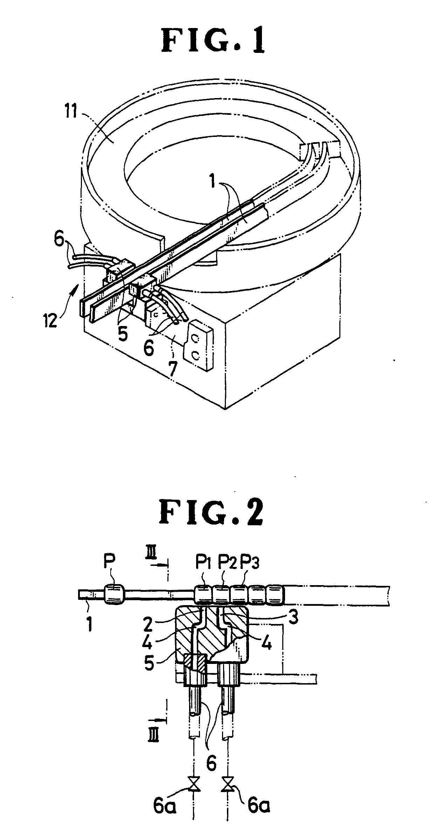

The present invention is particularly useful when embodied in a parts supplying apparatus such as shown in Figure 1, generally indicated by the numeral 12.

The apparatus 12 comprises a vibratable bowl or reservoir 11 for storing a number of relatively small parts P, two parallel chutes 1, 1 each in the form of a plate-like rail connected at its upstream end to the reservoir 11 for receiving the parts P and for slidingly supporting the same in succession, and a suction block 5 disposed near a suitable downstream portion of each chute 1.

The suction block 5 has a pair of juxtaposed first and second suction mouths 2, 3 facing the chute 1 and spaced from each other by a predetermined distance along the chute 1 for temporarily stopping the individual parts P1, P2, P3 by suction and for then discharging or sending out the parts P1, P2, P3 one at a time from the chute 1 in a manner described below.

In the embodiment, the parts P comprise top end stops to be attached two at a time to a pair of opposed stringer tapes of a slide fastener. For this purpose, the parts P are supported in two series on the two chutes 1, 1, but the number of the chutes is not pertinent here. Each of the parts P is of a U-shaped cross section so as to be supported by the chute 1 astride thereof, but the shape of the parts is not pertinent here.

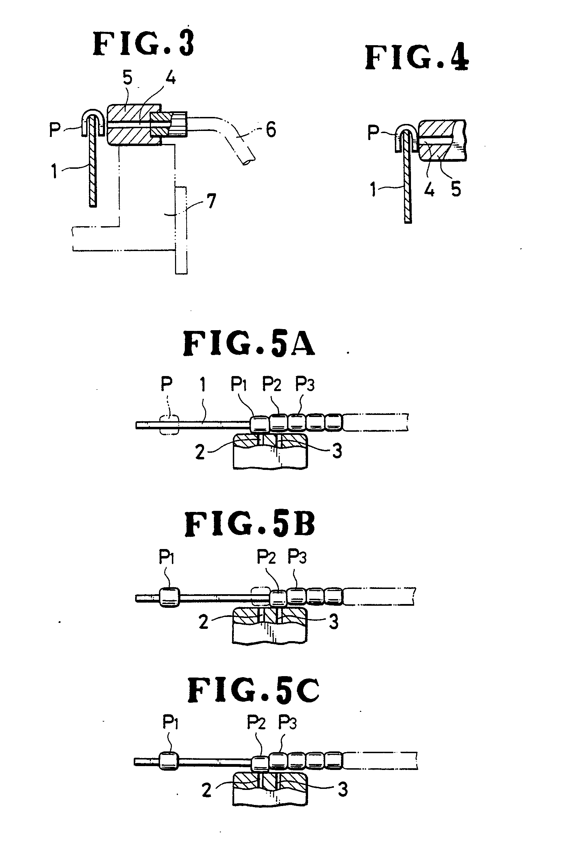

The two suction blocks 5, 5, one for each chute 1, are fixedly secured to a frame (not shown) by means of a bracket 7. The first and second suction mouths 2, 3 of each suction block 5 open to an upper edge of the chute 1, as shown in Figures 3 and 4, and communicate with a pair of first and second suction pipes 6, 6 via a pair of air passageways 4, 4, respectively, as shown in Figure 2.

The first and second suction pipes 6, 6 have a pair of first and second valves 6a, 6a, such as electromagnetic valves, which are actuated by a suitable control means (not shown) so as to impart suction to the respective suction mouths 2, 3 in timed relation to each other. Thus by the sucking action of each suction mouth 2, 3, a part P on the chute 1 is attracted against the sution block 5 from the position of Figure 3 to the position of Figure 4.

Specifically, as suction is imparted to the first suction mouth 2 by actuating the first valve 6a of the first suction pipe 6, a preceding or leading part P1 on the downstream portion of the chute 1 is attracted against the suction block 5 and is thereby stopped on the chute 1 (Figure 5A). At that time a succeeding or next part P2 is free from being sucked by the second suction mouth 3 as the latter is inoperative. Thus the succeeding parts P2, P3 are blocked by the preceding part P1 from freely sliding forwardly (leftwardly) on the chute 1 by the vibration of the reservoir 11. Designated at P in Figure 5A is a part having delivered by the previous operation.

Then, suction is released from the first mouth 2 by switching the first valve 6a of the first suction pipe 6, the preceding part P1 is allowed to freely slide on the chute 1 toward its downstream end by the vibration of the reservoir 11. Concurrently with this suction releasing of the first mouth 2, the second valve 6a of the second suction pipe 6 is actuated to impart suction to the second mouth 3. By the sucking action of the second mouth 3 the next part P2 is attracted against the sucking block 5 and is thereby stopped, preventing the following or succeeding parts P3 from freely sliding forwardly on the chute 1. Thus only the preceding part P1 had been delivered.

Subsequently, the second valve 6a is switched to release suction from the suction mouth 3 and, at the same time, the first valve 6a is actuated again to impart suction to the first suction mouth 2. As a result, the next part P2 is removed from the second mouth 3 to slide forwardly and is then stopped as being attracted by the first suction mouth 2.

Thus, the successive parts P sliding on the chute 1 are temporarily stopped at the suction block 5 and are then delivered or sent out therefrom one at a time reliably.

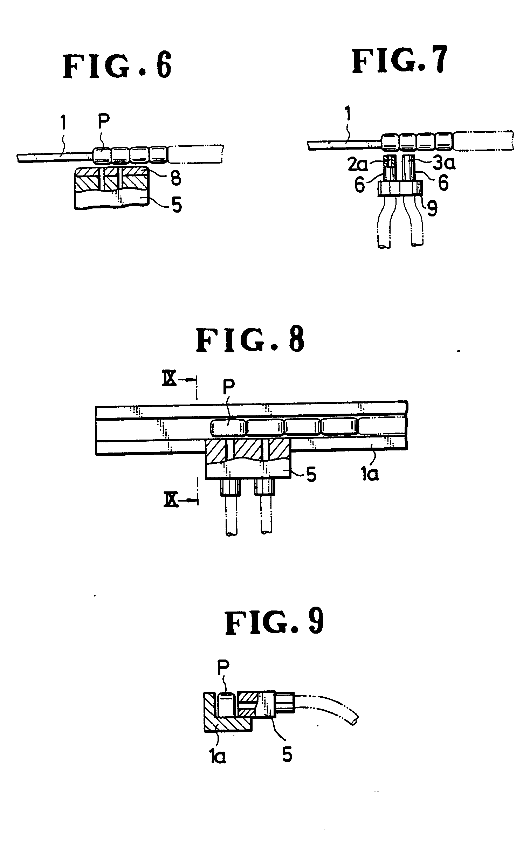

Figure 6 shows a second embodiment of the invention in which a shock absorbing member 8 such as of rubber or soft synthetic resin is attached to the suction block 5 at its surface to which the first and second suction mouths 2, 3 open. The shock absorbing member 8 serves to prevent the parts not only from being damaged but from coming off of the paint.

Figure 7 is a third embodiment in which a pair of modified first and second suction mouths 2a, 3a are defined by the respective extensions of the first and second suction pipes 6, 6, which extensions are supported by a support block 9. Like the embodiment of Figure 6, a shock absorbing member such as of rubber or soft synthetic resin may be attached to the end of each suction pipe 6 for the same purpose.

Figures 8 and 9 shows a fourth embodiment in which a modified chute 1a is in the form of an upwardly opening channel defining a parts passageway to which the first and second suction mouths of the suction block 5 open. Alternatively, the chute 1a may be in the form of a tube.

In the illustrated embodiment, the first and second suction pipes 6, 6 have the two separate valves 6a, 6a for controlling the first and second suction mouths 2, 3 individually. Alternatively, a single three-way valve may be connected to the first and second suction pipes 6, 6 for controlling the first and second suction mouths 2, 3.

For replacing the existing parts with those of different type or color, suction is released from both the first and second suction mouths 2, 3 to allow all the previous parts on the chute 1 to slide out of the chute 1, whereupon fresh parts are supplied onto the chute 1.

According to the present invention, since the parts are delivered one at a time by the first and second suction mouths disposed at the downstream side of the chute and communicating with the valved suction pipes, it is possible to make the entire apparatus simple in construction and compact in size, compared with the prior art apparaus in which the parts are delivered one at a time by mechanical means such as pivotable shutters or blocking levers.

Further, since the size of each suction mouth can be reduced in conformity with the size of the parts to be supplied, it is possible to deliver the parts one at a time with accuracy even if the parts are small.

## Claims

1. An apparatus fur supplying parts, comprising: a frame; a reservoir (11) mounted on said frame for storing a number of parts (P); a downwardly inclined chute (1) connected at its upstream end to said reservoir (11) for slidingly supporting the parts (P) from said reservoir in succession; characterized by a pair of juxtaposed first and second suction mouths (2, 3) disposed adjacent to a downstream end portion of said chute (1) and spaced from each other along said chute (1), said pair of first and second suction mouths (2, 3) pointing towards a part of the chute (1) along which the parts (P) will pass and having substantially parallel outlets for temporarily stopping the successive parts (P1), (P2), (P3) by suction to deliver the same, one at a time, from said chute (1); and a pair of first and second suction pipes (6), communicating with said first and second suction mouths (2, 3), respectively, and having at least one valve operative to impart suction to said first and second suction mouths (2, 3) alternately such that there is negligible time lag when such alternation takes place.

2. A parts supplying apparatus according to claim 1, said first and second suction mouths (2), (3) being defined by a suction block (5) fixedly secured to said frame, said suction block (5) having a pair of air passageways (4), (4) via which said first and second suction mouths (2), (3) communicate with said first and second suction pipes (6), (6), respectively.

3. A parts supplying apparatus according to claim 2, further including a shock absorbing member (8) attached to said suction block (5) at its surface to which said first and second suction mouths (2), (3) open.

4. A parts supplying apparatus according to claim 3, said shock absorbing member comprising rubber.

5. A parts supplying apparatus according to claim 3, said shock absorbing member comprising soft synthetic resin.

6. A parts supplying apparatus according to one of the claims 1 to 5, each of said first and second suction mouths (2a), (3b) being defined by an end of a respective one of said first and second suction pipes (6).

7. A parts supplying apparatus according to one of the claims 1 to 6 said chute (1) being in the form of a plate-like rail.

8. A parts supplying apparatus according to one of the claims 1 to 6, said chute (1a) being in the form of an upwardly opening channel.

9. A parts supplying apparatus according to one of the claims 1 to 6, said chute (1) being in the form of a tube.

## Patentansprüche

1. Vorrichtung zum Zuführen von Teilen, umfassend: einen Rahmen; einen Vorratsbehälter (11), der auf dem Rahmen angeordnet ist, um eine Anzahl von Teilen (P) zu speichern; eine nach unten geneigte Rutsche (1), deren oberes Ende mit dem Vorratsbehälter (11) verbunden ist, um die Teile von dem Vorratsbehälter nacheinander gleitend abzustützen, gekennzeichnet durch zwei nebeneinander angeordnete erste und zweite Ansaugmündungen (2, 3), die neben einem stromabwärtigen Endbereich der Rutsche (1) angeordnet sind und längs der Rutsche (1) einen Abstand voneinander haben, wobei die beiden ersten und zweiten Ansaugmündungen (2, 3) gegen einen Bereich der Rutsche (1) gerichtet sind, längs welchem sich die Teile (P) vorbeibewegen, und im wesentlichen parallele Kanäle haben, um die aufeinanderfolgenden Teile (P1, P2, P3) vorübergehend anzuhalten, um sie einzeln von der Rutsche (1) zuzuführen; und ein Paar erste und zweite Ansaugleitungen (6), die mit der ersten bzw. zweiten Ansaugmündung (2, 3) in Verbindung stehen und die mindestens ein Ventil haben, das betätigbar ist, um abwechselnd an der ersten und zweiten Ansaugmündung (2, 3) eine Saugwirkung zu erzeugen, so daß das Umschalten mit einer vernachlässigbaren Zeitverzögerung erfolgt.

2. Vorrichtung nach Anspruch 1, wobei die erste und die zweite Ansaugmündung (2, 3) durch einen Ansaugblock (5) begrenzt ist, der an dem Rahmen ortsfest angeordnet ist, wobei der Ansaugblock (5) zwei Luftkanäle (4, 4) aufweist, über die die erste und die zweite Ansaugmündung (2, 3) mit der ersten bzw. zweiten Ansaugleitung (6, 6) in Verbindung steht.

3. Vorrichtung nach Anspruch 2, ferner umfassend ein Stoßdämpfungsglied (8), das an der die erste und zweite Ansaugmündung (2, 3) aufweisenden Fläche des Ansaugblocks (5) befestigt ist.

4. Vorrichtung nach Anspruch 3, wobei das Stoßdämpfungsglied aus Gummi besteht.

5. Vorrichtung nach Anspruch 3, wobei das Stoßdämpfungsglied aus weichem Kunststoff besteht.

6. Vorrichtung nach einem der Ansprüche 1 bis 5, wobei die erste und die zweite Ansaugöffnung (2a, 3b) durch ein Ende der ersten bzw. zweiten Ansaugleitung (6) begrenzt ist.

7. Vorrichtung nach einem der Ansprüche 1 bis 6, wobei die Rutsche (1) die Form einer leistenartigen Schiene hat.

8. Vorrichtung nach einem der Ansprüche 1 bis 6, wobei die Rutsche (1a) die Form einer nach oben offenen Rinne hat.

9. Vorrichtung nach einem der Ansprüche 1 bis 6, wobei die Rutsche (1) die Form eines Rohres hat.

## Revendications

1. Appareil pour amener des pièces, comprenant: un bâti; un réservoir (11) monté sur ledit bâti pour stocker un certain nombre de pièces (P); une goulotte (1) inclinée vers le bas reliée à son extrémité d'amont audit réservoir (11) pour supporter de façon glissante les pièces (P) depuis ledit réservoir en succession; caractérisé par une paire de première et seconde bouches d'aspiration (2, 3) juxtaposées, placées de façon adjacente à une partie d'extrémité d'aval de ladite goulotte (1) et espacées l'une de l'autre le long de ladite goulotte (1), ladite paire de première et seconde bouches d'aspiration (2, 3) étant dirigée vers une partie de la goulotte (1) le long de laquelle les pièces (P) vont passer et ayant des sorties sensiblement parallèles pour stopper temporairement les pièces successives (P1), (P2), (P3) par aspiration pour délivrer celles-ci, une par une, depuis ladite goulotte (1); et une paire de premier et second tuyaux d'aspiration (6), communiquant avec lesdites première et seconde bouches d'aspiration (2, 3), respectivement, et ayant au moins une soupage agissant pour communiquer une aspiration auxdites première et seconde bouches d'aspiration (2, 3) en alternance de sorte qu'il y a un décalage dans le temps négligeable lorsque cette alternance a lieu.

2. Appareil d'amenée de pièces selon la revendication 1, lesdites première et seconde bouches d'aspiration (2), (3) étant définies par un bloc d'aspiration (5) fixé audit bâti, ledit bloc d'aspiration (5) ayant une paire de passages d'air (4), (4) par lesquels lesdites première et seconde bouches d'aspiration (2), (3) communiquent avec lesdits premier et second tuyaux d'aspiration (6), (6), respectivement.

3. Appareil d'amenée de pièces selon la revendication 2, comprenant en outre un élément amortisseur de choc (8) fixé audit bloc d'aspiration (5) à sa surface où-débouchent lesdites première et seconde bouches d'aspiration (2), (3).

4. Appareil d'amenée de pièces selon la revendication 3, ledit élément amortisseur de choc comprenant du caoutchouc.

5. Appareil d'amenée de pièces selon la revendication 3, ledit élément amortisseur de choc comprenant une résine synthétique molle.

6. Appareil d'amenée de pièces selon l'une des revendications 1 à 5, chacune desdites première et seconde bouches d'aspiration (2a), (3b) étant définie par une extrémité de l'un respectivement desdits premier et second tuyaux d'aspiration (6).

7. Appareil d'amenée de pièces selon l'une des revendications 1 à 6, ladite goulotte (1) étant sous la forme d'un rail en forme de plaque.

8. Appareil d'amenée de pièces selon l'une des revendications 1 à 6, ladite goulotte (1a) étant sous la forme d'un canal ouvrant vers le haut.

9. Appareil d'amenée de pièces selon l'une des revendications 1 à 6, ladite goulotte (1) étant sous la forme d'un tube.

# FIG. 1

# FIG. 2

1

# FIG.3

# FIG.4

# FIG.5A

# FIG.5B

# FIG.5C

EP 0 215 484 B1

# FIG . 6

# FIG.7

# FIG . 8

# FIG. 9

# FIG.10
PRIOR ART